# DEMANDE DE BREVET EUROPEEN

(11) **EP 1 555 105 A2**
(43) Date de publication de la demande: **20.07.2005**
(21) Numéro de dépôt: 05290068.5
(22) Date de dépôt: 11.01.2005
(51) Int. Cl.: B29C 44/12

(54) **Panneau structurel à peaux poreuses**

(30) Priorité: 13.01.2004 FR 0450072
(71) Demandeur: Centre d'Etude et de Recherche pour l'Automobile ( CERA), 51100 Reims (FR)
(72) Inventeur: Brillon, Eric, 51140 Chalons sur Vesle (FR)
(74) Mandataire: Sayettat, Julien Christian

(57) **Abrégé**

L'invention concerne un procédé de réalisation d'un panneau structurel pour véhicule automobile comprenant les étapes suivantes :
- Prévoir deux peaux (3,3') de matériau poreux agencées pour permettre, dans les conditions d'un moulage par injection-réaction (RIM), une pénétration partielle de mousse (2) dans leur épaisseur, de sorte à les rigidifier et à permettre, au moins à travers l'une des peaux, un passage des gaz à évacuer ;
- Mettre en place lesdites peaux contre les parois d'un moule de moulage RIM (16), des évents de dégazage (17) étant prévus sur au moins l'une desdites parois ;
- Injecter un mélange précurseur de mousse (2) sensiblement rigide entre lesdites peaux ;
- Réaliser l'expansion de la mousse (2) ;
- Démouler le panneau.

L'invention concerne également panneau structurel de véhicule automobile, tel qu'une tablette arrière, de type sandwich, réalisé par un tel procédé.

## Description

L'invention concerne un procédé de réalisation d'un panneau structurel de véhicule automobile et un panneau obtenu par un tel procédé.

Pour réaliser de tels panneaux, en particulier des tablettes arrières destinées à séparer le compartiment à bagages de l'habitacle, il est connu de former par moulage par injection réaction (RIM) une âme en mousse, ladite âme étant ensuite revêtue, sur au moins l'une de ses faces, d'un revêtement d'aspect qui peut lui être associé par exemple par collage à chaud.

De tels panneaux structurels peuvent aussi être par exemple des garnitures latérales de compartiment à bagages, ou des « faux-planchers » destinés à conférer une planéité satisfaisante au sol d'un véhicule automobile.

Afin d'assurer une tenue mécanique satisfaisante au panneau, il est connu de disposer, dans le moule RIM, de la fibre de renfort, par exemple sous forme de mat de verre, et le cas échéant un insert rigide, par exemple sous forme de tube métallique en U, de sorte à les surmouler par la mousse.

La fibre de renfort et/ou l'insert rigide sont alors intégrés au coeur du panneau et contribuent à sa rigidité.

Toutefois, le contact répété entre la fibre de verre et le moule conduit, par abrasion, à une usure prématurée des moules. Quant à l'insert métallique, il occasionne des coûts importants de réalisation et de positionnement dans le moule, et un alourdissement notable du panneau.

En outre, afin de permettre un démoulage aisé de l'âme en mousse, il est nécessaire de disposer contre les parois du moule un agent de démoulage, ce qui représente une opération complexe, difficilement automatisable et très salissante.

Par ailleurs, la réaction d'expansion et de polymérisation de la mousse s'accompagne d'un dégagement gazeux dont l'évacuation est usuellement réalisée au niveau du plan de joint du moule.

Ceci se traduit notamment par des fuites de mousse au niveau de ce plan de joint et rend nécessaire un nettoyage régulier du moule.

D'autre part, la mousse en fin d'expansion présente généralement une surface imparfaite, comportant des défauts tels que des « cratères », qui peuvent nuire à l'aspect du panneau, et ceci même après association d'un revêtement d'aspect.

Quant au revêtement d'aspect, son association au panneau représente une étape délicate, coûteuse et susceptible de causer des rebuts de fabrication.

L'invention a pour but de pallier ces inconvénients.

A cet effet et selon un premier aspect, l'invention propose un procédé de réalisation d'un panneau structurel pour véhicule automobile comprenant les étapes suivantes :
- Prévoir deux peaux de matériau poreux agencées pour permettre, dans les conditions d'un moulage par injection-réaction (RIM), une pénétration partielle de mousse dans leur épaisseur, de sorte à les rigidifier et à permettre, au moins à travers l'une des peaux, un passage des gaz à évacuer ;
- Mettre en place lesdites peaux contre les parois d'un moule de moulage RIM, des évents de dégazage étant prévus sur au moins l'une desdites parois ;
- Injecter un mélange précurseur de mousse sensiblement rigide entre lesdites peaux ;
- Réaliser l'expansion de la mousse ;
- Démouler le panneau.

Par mousse sensiblement rigide, on entend une mousse ne présentant qu'une faible déformation élastique, par opposition à des mousses souples telles qu'utilisées pour réaliser des coussins de sièges.

Le panneau obtenu, de par la rigidification apportée aux peaux, du fait de la pénétration de la mousse au sein d'une partie de leur épaisseur, et de par « l' effet de poutre » conféré par l'adhésion des peaux à l'âme en mousse, ne requiert plus le surmoulage à coeur de fibres de renfort et/ou d'un insert rigide.

Le fait que la mousse n'imprègne, une fois son expansion achevée, qu'une partie de l'épaisseur du matériau poreux permet d'éviter tout contact de la mousse avec le moule et donc de s'affranchir de l'utilisation d'agents de démoulage.

Selon une réalisation, le procédé prévoit d'appliquer une dépression dans le moule de moulage RIM, lors de l'expansion de la mousse, par l'intermédiaire des évents de dégazage.

Le fait d'appliquer une telle dépression permet de conférer une expansion plus homogène à la mousse, avec pour avantages d'en améliorer l'état de surface et le cas échéant de réduire la masse de mélange précurseur de mousse injecté, ceci permettant de diminuer le poids du panneau.

En outre, une telle dépression permet de favoriser la pénétration de la mousse dans l'épaisseur des peaux.

En variante, lesdits évents peuvent toutefois ne pas être reliés à un système de création d'une dépression, et n'ont dans ce cas qu'une fonction de dégazage. Lesdits évents peuvent dans ce cas n'être disposés que sur la paroi supérieure du moule, les gaz étant naturellement évacués vers le haut.

Qu'une dépression soit appliquée ou non, le fait que le dégazage soit effectué par des évents répartis sur la paroi du moule permet d'étancher son plan de joint et ainsi d'éviter les fuites de mousse à son niveau.

Le procédé peut comprendre en outre une étape de mise en forme tridimensionnelle des peaux avant leur mise en place dans le moule, par exemple par thermoformage.

Un même matériau poreux peut être disposé de part et d'autre de l'âme en mousse. En variante, deux matériaux poreux différents, variant par exemple par leur structure et/ou leur composition, peuvent être utilisés de part et d'autre de l'âme en mousse, ceci en fonction des caractéristiques attendues pour le panneau.

En particulier, le matériau de la peau disposée sur la paroi inférieure du moule ne doit pas nécessairement présenter de porosité aux gaz s'il n'est pas prévu d'évents sur ladite paroi.

Selon un deuxième aspect, l'invention propose un panneau structurel de véhicule automobile, tel qu'une tablette arrière, de type sandwich, réalisé par un procédé tel que décrit ci-dessus, ledit panneau comprenant une âme en mousse sensiblement rigide et deux peaux surmoulées de part et d'autre de ladite âme, lesdites peaux étant rigidifiées par une pénétration partielle de mousse dans leur épaisseur.

Pour permettre un passage des gaz formés par la réaction de moussage tout en n'autorisant qu'une pénétration partielle de la mousse dans son épaisseur, le matériau constituant une peau doit être agencé de façon particulière.

Selon une réalisation, les peaux comprennent une couche de matériau fibreux tel qu'un non tissé ou un carton « buvard », agencé pour permettre une pénétration partielle de la mousse, ladite couche étant adjacente à l'âme en mousse.

Dans une réalisation, cette couche peut être à base de fibres de verre, ce qui permet d'assurer après pénétration par la mousse, une très bonne rigidité de la peau.

Au moins une peau peut comprendre en outre, pour améliorer son esthétique, une couche de revêtement d'aspect poreux tel qu'un textile, ladite couche étant disposée à distance de l'âme en mousse.

Le caractère poreux de cette couche permet de conférer au panneau des propriétés d'absorption acoustique et de permettre, le cas échéant, le dégazage à travers la peau correspondante.

Dans une réalisation particulière, il est prévu que le revêtement soit formé d'un aiguilleté, ledit aiguilleté étant associé en son envers à une grille ou un voile de fibres de verre par aiguilletage, la mousse pénétrant dans l'épaisseur de la fibre de verre de sorte à rigidifier la peau correspondante.

Afin de permettre la mise en forme tridimensionnelle d'une telle peau, par thermoformage, il peut être prévu que l'aiguilleté et/ou la couche de fibre de verre comprenne un liant fusible.

Le panneau peut comprendre une bavette saillante, formée d'une pièce avec l'une des peaux, ladite bavette étant prévue sur tout ou partie de la périphérie dudit panneau et étant destinée à former moyen d'étanchéité acoustique entre ledit panneau et son environnement extérieur.

En variante, le panneau peut comprendre une bavette, formée d'une pièce avec l'une des peaux, ladite bavette étant rembordée sur tout ou partie de la périphérie dudit panneau de sorte à former finition périphérique dudit panneau. La présence de liant fusible peut être mise à profit pour assurer par fusion la tenue de la finition.

Il peut être prévu en outre qu'au moins un organe fonctionnel, tel qu'une fixation, soit surmoulé par l'âme en mousse.

Dans un mode de réalisation, les peaux sont respectivement en contact l'une avec l'autre sur une zone non périphérique localisée du panneau une fois moulé.

Une telle zone peut par exemple se trouver en regard d'un haut-parleur, solidaire ou non dudit panneau, afin d'en assurer la protection tout en permettant la diffusion des ondes sonores du fait du caractère poreux de ladite zone.

En variante, une telle zone peut se présenter sous la forme d'une bande de faible largeur, s'étendant transversalement sur le panneau, de sorte à former charnière souple pour articuler ledit panneau en partie médiane. Une telle réalisation peut s'appliquer par exemple dans le cas de tablettes arrières articulées de sorte à faciliter l'accès aux bagages.

Dans une autre réalisation, le panneau peut comprendre une cavité localisée exempte de mousse, ladite cavité étant délimitée par les peaux et formant volume d'intégration d'un élément fonctionnel. Dans le cas d'une tablette arrière, un tel élément peut être par exemple un système d'enroulement d'un rideau pare-soleil.

D'autres particularités et avantages de l'invention apparaîtront dans la description qui suit, faite en référence aux figures jointes dans lesquelles :
- La figure 1 représente une vue en coupe partielle d'un panneau selon l'invention ;
- La figure 2 représente une vue en coupe partielle d'un panneau associé à un organe fonctionnel surmoulé ;
- La figure 3 représente une vue d'ensemble en coupe d'un panneau selon une première réalisation dans laquelle les peaux sont en contact sur une zone non périphérique localisée du panneau, ladite zone présentant un caractère poreux permettant le passage des ondes sonores provenant d'un haut-parleur disposé en regard ;
- La figure 4 représente une vue d'ensemble en coupe d'un panneau selon une seconde réalisation dans laquelle une cavité localisée est formée entre les peaux ;
- La figure 5 représente une vue schématique en coupe d'un moule permettant de réaliser un panneau selon l'invention, le moule étant représenté après injection du mélange précurseur de mousse.

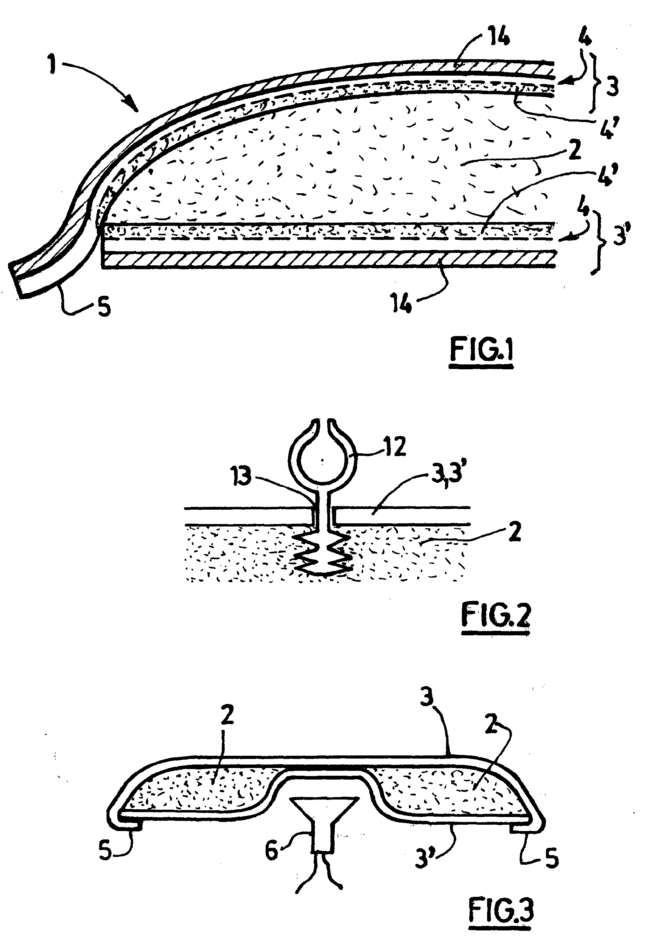

En référence à la figure 1, on décrit à présent un panneau 1 comprenant une âme en mousse 2, par exemple de polyuréthanne , une peau supérieure 3 et une peau inférieure 3'. Les peaux 3, 3' sont à base de matériau poreux, surmoulées par ladite âme, la mousse 2 pénétrant partiellement dans une partie 4' de l'épaisseur desdites peaux de sorte à les rigidifier.

Dans la réalisation représentée, les peaux 3, 3' comprennent une couche de matériau fibreux 4 et une couche de revêtement d'aspect poreux 14 tel qu'un textile, non représenté sur les autres figures.

Le panneau 1 comprend en outre une bavette saillante 5 formée d'une pièce avec la peau supérieure 3, de sorte à former moyen d'étanchéité acoustique entre la tablette une fois montée dans le véhicule et son environnement.

La bavette 5 peut toutefois être éventuellement rembordée en périphérie dudit panneau, pour former finition périphérique, ainsi que représenté en figure 3.

Comme représenté sur la figure 2, un organe fonctionnel, tel qu'une fixation 12, peut être ancré au panneau 1 par surmoulage. Il est prévu un orifice 13 dans la peau 3, 3', de sorte à permettre l'insertion dudit organe.

Dans la réalisation de la figure 3, les peaux 3, 3' sont respectivement en contact l'une de l'autre sur une zone non périphérique localisée 15 du panneau 1.

Ladite zone présente un caractère poreux permettant le passage des ondes sonores provenant d'un haut parleur 6 disposé en regard.

En variante non représentée, la zone 15 peut se présenter sous la forme d'une bande de faible largeur, disposée sur toute la longueur du panneau 1, de sorte à former charnière souple pour articuler ledit panneau en partie médiane.

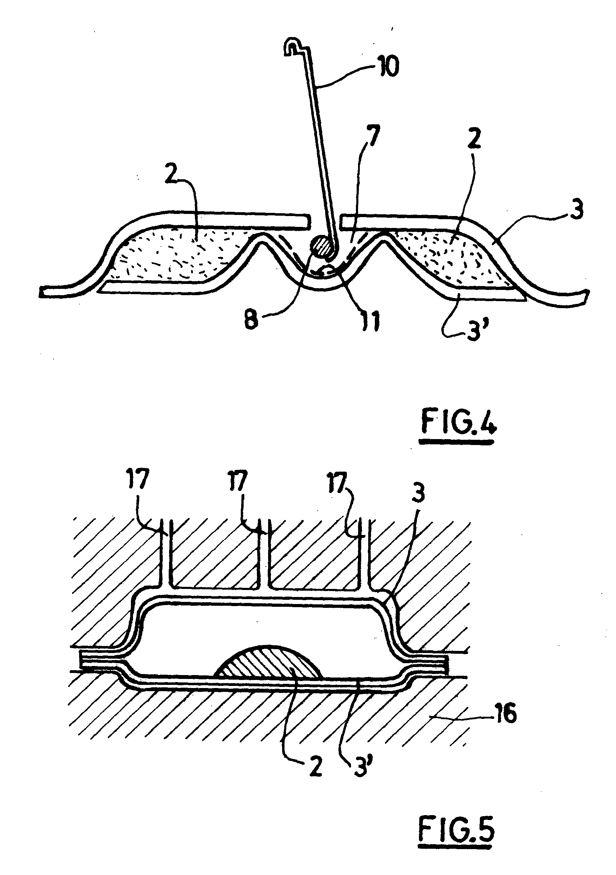

La figure 4 représente un panneau 1 comprenant une cavité localisée 7 exempte de mousse 2, formée entre les peaux 3, 3'. Ladite cavité permet d'intégrer un élément fonctionnel tel qu'un système 8 d'enroulement d'un rideau pare soleil 10.

Ladite cavité peut être revêtue d'un matériau absorbant 11, tel qu'un feutre, destiné à absorber les ondes sonores indésirables.

Pour réaliser un panneau 1 selon l'invention, on dispose, comme représenté en figure 5, deux peaux 3, 3' contre les parois d'un moule de moulage RIM 16, entre lesquelles est injecté un mélange précurseur de mousse 2.

Le moule 16 est pourvu d'évents 17, répartis ici sur sa paroi supérieure et permettant d'assurer le dégazage notamment lors de la réaction d'expansion et de polymérisation de la mousse 2. En outre, les évents 17 permettent de réaliser une dépression en vue de favoriser le dégazage et une bonne expansion de la mousse qui pénètre dans une partie de l'épaisseur des peaux 3, 3', ce qui a pour effet de les rigidifier.

## Revendications

1. Procédé de réalisation d'un panneau structurel (1) pour véhicule automobile comprenant les étapes suivantes :
• Prévoir deux peaux (3, 3) de matériau poreux agencées pour permettre, dans les conditions d'un moulage par injection-réaction (RIM), une pénétration partielle de mousse (2) dans leur épaisseur, de sorte à les rigidifier et à permettre, au moins à travers l'une des peaux, un passage des gaz à évacuer ;
• Mettre en place lesdites peaux contre les parois d'un moule de moulage RIM (16), des évents de dégazage (17) étant prévus sur au moins l'une desdites parois ;
• Injecter un mélange précurseur de mousse (2) sensiblement rigide entre lesdites peaux ;
• Réaliser l'expansion de la mousse (2) ;
• Démouler le panneau (1).

2. Procédé selon la revendication 1, **caractérisé en ce qu'**une dépression est appliquée dans le moule (16), lors de l'expansion de la mousse (2), par l'intermédiaire des évents (17).

3. Procédé selon l'une des revendications 1 ou 2, **caractérisé en ce qu'**il comprend en outre une étape de mise en forme tridimensionnelle des peaux (3, 3') avant leur mise en place dans le moule (16).

4. Panneau structurel (1) de véhicule automobile, tel qu'une tablette arrière, de type sandwich, réalisé par un procédé selon l'une des revendications 1 à 3, ledit panneau comprenant une âme en mousse (2) sensiblement rigide et deux peaux (3, 3') surmoulées de part et d'autre de ladite âme, ledit panneau étant **caractérisé en ce que** lesdites peaux sont rigidifiées par une pénétration partielle de ladite mousse dans leur épaisseur.

5. Panneau selon la revendication 4, **caractérisé en ce que** les peaux (3, 3') comprennent une couche de matériau fibreux 4, ladite couche étant adjacente à l'âme en mousse (2).

6. Panneau selon l'une des revendications 4 ou 5, **caractérisé en ce qu'**au moins une peau (3, 3') comprend en outre une couche de revêtement d'aspect poreux (14) tel qu'un textile, ladite couche étant à distance de l'âme en mousse (2).

7. Panneau selon la revendication 6, **caractérisé en ce que** le revêtement d'aspect (14) est un aiguilleté, ledit aiguilleté étant associé en son envers à une couche (4) de fibres de verre par aiguilletage.

8. Panneau selon l'une quelconque des revendications 4 à 7, **caractérisé en ce qu'**il comprend une bavette saillante (5) formée d'une pièce avec l'une des peaux (3, 3'), ladite bavette étant prévue sur tout ou partie de la périphérie dudit panneau et étant destinée à former moyen d'étanchéité acoustique entre ledit panneau et son environnement extérieur.

9. Panneau selon l'une quelconque des revendications 4 à 7, **caractérisé en ce qu'**il comprend une bavette (5), formée d'une pièce avec l'une des peaux (3,3'), ladite bavette étant rembordée sur tout ou partie de la périphérie dudit panneau de sorte à former finition périphérique dudit panneau.

10. Panneau selon l'une quelconque des revendications 4 à 9, **caractérisé en ce qu'**il comprend au moins un organe fonctionnel, tel qu'une fixation (12), surmoulé par l'âme en mousse (2).

11. Panneau selon l'une quelconque des revendications 4 à 10, **caractérisé en ce que** les peaux (3,3') sont respectivement en contact l'une avec l'autre sur une zone (15) non périphérique localisée du panneau une fois moulé.

12. Panneau selon l'une quelconque des revendications 4 à 11, **caractérisé en ce qu'**il comprend une cavité localisée (7) exempte de mousse (2), ladite cavité étant délimitée par les peaux (3,3') et formant volume d'intégration d'un élément fonctionnel.
